Europäisches Patentamt

European Patent Office

Office européen des brevets

(11) Numéro de publication: **0 380 430 B1**

(12) **FASCICULE DE BREVET EUROPEEN**

(45) Date de publication de fascicule du brevet: **09.08.95**

(51) Int. Cl.⁶: **C09C 1/02**, C09D 17/00, D21H 19/38, D21H 17/67, C09D 7/12, C08K 3/26

(21) Numéro de dépôt: **90420033.4**

(22) Date de dépôt: **23.01.90**

(54) **Procédé de broyage de carbonate de calcium en milieu aqueux.**

(30) Priorité: **27.01.89 FR 8901317**

(43) Date de publication de la demande:
**01.08.90 Bulletin 90/31**

(45) Mention de la délivrance du brevet:
**09.08.95 Bulletin 95/32**

(84) Etats contractants désignés:
**AT DE ES IT**

(56) Documents cités:
**EP-A- 0 100 948**
**GB-A- 949 260**
**LU-A- 55 672**

(73) Titulaire: **Société COATEX, Société Anonyme**
**35 Cours Aristide Briand**
**F-69300 Caluire (FR)**

(72) Inventeur: **Bousquet, Hubert**
**35, cours Aristide Briand**
**F-69300 Caluire (FR)**
Inventeur: **Ravet, Georges**
**Route Louis Pradel**
**F-69290 Saint-Genis-Les-Ollières (FR)**
Inventeur: **Rousset, Jacky**
**Baneins**
**F-01990 Saint-Trivier-Sur-Moignans (FR)**

EP 0 380 430 B1

**Description**

Domaine de l'invention

L'invention concerne un procédé de broyage en milieu aqueux de carbonate de calcium en présence d'un agent de broyage hydrosoluble en quantité très inférieure à celle actuellement utilisée dans l'art connu, conduisant néanmoins à des suspensions affinées ayant une concentration en matière sèche d'au moins 70 % en poids et une coupe granulométrique d'au plus deux micromètres.

Arrière plan de l'invention

Depuis longtemps déjà, il est connu d'utiliser des substances minérales telles que les Carbonate, Sulfate et Silicate de Calcium, ainsi que le Dioxyde de Titane pour la préparation de produits industriels destinés aux domaines des Peintures, de l'enduction du Papier, des charges pour caoutchoucs et résines synthétiques, etc...

Mais comme ces substances minérales ne possèdent pas une structure naturelle lamellaire ou feuilletée facilitant leur délitage, comme c'est le cas de certaines substances telles que les Silicates d'Aluminium habituellement connus sous le nom de Kaolin, l'homme de l'art doit les transformer par broyage en une suspension aqueuse de grande finesse dont les grains constitutifs ont une dimension la plus faible possible, c'est-à-dire inférieure à quelques microns, pour pouvoir les utiliser dans le domaine pigmentaire.

Par le nombre des publications faites dans ce domaine, la littérature spécialisée révèle l'importance et la complexité du broyage en milieu aqueux de sustances minérales pour obtenir une qualité partiellement affinée autorisant une application pigmentaire. C'est ainsi que dans le cas particulier de l'enduction des Papiers, il est bien connu que la masse d'enduction formée de pigments minéraux tels que les Kaolins, le Carbonate de calcium, le Sulfate de Calcium, ainsi que le Dioxyde de Titane mis en suspension dans l'eau, contient également des agents liants et dispersants ainsi que d'autres adjuvants tels que des épaississants et des agents de coloration. Or, il est souhaitable qu'une telle masse d'enduction dispose d'une viscosité faible et stable pendant la durée de l'enduction pour en faciliter la manipulation et l'application, de même qu'une teneur en matière minérale la plus élevée possible afin de diminuer la quantité d'énergie calorifique nécessaire à l'évacuation par séchage de la fraction aqueuse de la masse d'enduction. Une telle suspension, idéale, réunissant toutes ces qualités fondamentales, résoudrait pour l'homme de l'art les problèmes bien connus de broyage, de stockage, de transport du lieu de production vers le lieu d'application, enfin de transfert par pompe lors de son utilisation.

Or, il a été constaté que les techniques de broyage en milieu aqueux de substances minérales conduisaient à des suspensions instables dans le temps, en raison des effets de sédimentation des substances minérales et d'augmentation de la viscosité. C'est pourquoi l'homme de l'art s'est résigné, dans les procédés appartenant aux techniques les plus anciennes d'obtention par broyage de substances pigmentaires, à réaliser le broyage en suspension aqueuse de la substance minérale, selon une ou plusieurs opérations successives , puis à sécher et à classifier cette substance broyée en éliminant les particules insuffisamment fines, à séparer les particules minérales ayant la dimension pigmentaire souhaitée, afin d'obtenir une fine poudre minérale à faible teneur en eau. Ainsi cette fine poudre destinée aux applications pigmentaires est facilement transportable de son lieu de production vers celui de l'utilisation où elle est à nouveau mise en suspension dans l'eau pour être utilisée comme produit pigmentaire.

Dès lors, le fait de ne pas pouvoir conserver la substance minérale pigmentaire sous la forme d'une suspension aqueuse entre les opérations de broyage et d'application, a incité l'homme de l'art à poursuivre des recherches en ce domaine, recherches qui consistent en la réalisation de broyage de sustances minérales en suspension aqueuse donnant après broyage une suspension pigmentaire de viscosité faible et stable dans le temps. C'est ainsi, par exemple, qu'est proposé dans le brevet français n° 1 506 724 un procédé de préparation par broyage d'une suspension aqueuse de Carbonate de Calcium, stable dans le temps, qui consiste à former sous agitation une suspension aqueuse contenant 25 à 50 % en poids de Carbonate de Calcium et à broyer cette matière aqueuse au moyen d'un corps broyant approprié, en présence d'un agent dispersant. Cet agent dispersant est un polymère acrylique soluble dans l'eau, que l'on ajoute au milieu de broyage à raison de 0,2 à 0,4 % en poids du Carbonate de Calcium présent. Or, malgré l'indéniable avantage de disposer d'une suspension minérale pigmentaire de bonne stabilité dans le temps, il apparait qu'une telle suspension présente des inconvénients qui peuvent être considérés comme majeurs par l'homme de l'art. Tel est le cas, par exemple pour la teneur en matière sèche d'une telle suspension destinée au broyage qui doit être impérativement comprise entre 25 % et 50 % en poids et de préférence égale à environ 40 % en poids. Car, dans le cas où cette concentration est inférieure à 25 %, le procédé décrit est économiquement peu intéressant à cause de sa faible productivité, et dans le cas où cette concentration initiale en matière sèche est supérieure à 50 %, l'efficacité du procédé de broyage diminue en raison de la forte augmentation de la viscosité du milieu qui devient un empêchement à la réalisation du broyage lui-même en donnant, de ce fait, une suspension de granulométrie grossière.

Ainsi, quand la concentration en matière sèche de la suspension destinée au broyage est choisie dans le domaine de 25 % à 50 % en poids, la granulométrie de Carbonate de Calcium obtenue après une très longue période de broyage, en présence de l'agent dispersant, peut-être considérée comme favorable pour les applications pigmentaires, puisque 95 % des particules ont leur plus grande dimension inférieure à deux microns.

Le fait de ne pas pouvoir pratiquer le broyage d'une suspension aqueuse de substances minérales à concentration supérieure à 50 % à cause de l'augmentation brutale de la viscosité, a incité l'homme de l'art à trouver une nouvelle voie. Il a, dés lors, été proposé des procédés de mise en suspension aqueuse, et non plus de broyage, de substances minérales à haute teneur en matière sèche. Les brevets français n° 1 562 326 et luxembourgeois Lu 55672 par exemple, relatent un procédé de préparation d'une suspension aqueuse de substances minérales. Le but poursuivi par ce procédé consiste à obtenir une suspension aqueuse hautement concentrée en matière sèche et suffisament stable pour qu'elle puisse être transportée sous cette forme depuis son lieu de fabrication jusqu'à son lieu d'exploitation. Le procédé proposé consiste à former une suspension aqueuse de matières minérales contenant de 70 % à 85 % en poids de matière sèche dont au moins 99 % en poids des particules initiales ont une dimension inférieure ou égale à 50 microns, puis à agiter la dite suspension en présence d'un agent dispersant qui peut être un sel de Sodium ou de Potassiun d'un acide polyphosphorique, d'un acide polyacrylique, d'un acide polysilicique, etc... obtenu par leur neutralisation complète au moyen d'un hydroxyde de sodium ou de potassium.

Puis cet agent dispersant est introduit à raison de 0,05 % à 0,5 % en poids par rapport a poids de matière sèche de la dite suspension.

L'auteur constate que la teneur en matière sèche de la suspension ne devrait pas être supérieure à 85 % en poids en raison de la forte augmentation de sa viscosité et ne pouvait pas être inférieure à 70 % en poids sans provoquer une sédimentation préjudiciable.

Ainsi, l'art antèrieur propose à l'homme de l'art des solutions qui ne peuvent pas le satisfaire pleinement. **Il en est de même de la méthode de traitement du carbonate de calcium décrit dans le brevet britannique n° 949260 qui consiste à utiliser comme agent dispersant des composés d'un mélange d'acide carboxylique organique ayant au moins un groupe fonctionnel lié au carbone tel que l'acide citrique ou diglycolique et d'un composé basique tel que la soude ou la diéthanolamine.**

L'une de ces solutions concerne le broyage en présence d'un agent dispersant, d'une suspension aqueuse de Carbonate de Calcium trop peu concentrée en matière sèche pour être intéressante, bien qu'elle ait l'avantage de produire une suspension pigmentaire de faible viscosité et bien affinée, donnant jusqu'à 95 % de particules de dimension inférieure à deux microns.

L'autre de ces solutions concerne la préparation d'une suspension aqueuse à haute teneur en matière sèche, contenant 70 % à 85 %, en poids de matériaux minéraux dont 99 % des particules initiales ont une dimension inférieure ou égale à 50 microns, en introduisant dans le milieu un agent dispersant permettant de stabiliser ces particules.

De nombreux travaux ont consisté à rendre plus performants les agents de broyage issus de la chimie des polymères carboxyliques permettant d'obtenir des suspensions concentrées de carbonate de calcium affiné.

C'est ainsi que le brevet français numéro 2 539 137 décrit un agent de broyage à base de polymères et ou copolymères acryliques dont le poids moléculaire a été bien sélectionné dans une fourchette de viscosité spécifique égale à 0,50 - 0,60 et dont la neutralisation est réalisée par au moins un agent de neutralisation disposant d'une fonction monovalente et au moins un agent de neutralisation disposant d'une fonction polyvalente.

**C'est ainsi également que le brevet européen EP 0 100 948 décrit un agent de broyage à base de polymères et/ou copolymères acryliques acides dont la neutralisation est réalisée partiellement par au moins un agent de neutralisation disposant d'au moins une fonction monovalente.**

D'autre par le brevet européen 0 108 842 propose une amélioration de l'agent de broyage qui consiste à introduire un comonomère sulfoné tel que l'acide acrylamidopropanesulfonique dans la molécule du polymère carboxylique.

Mais dans tous les cas les suspensions de carbonate de calcium de haute concentration et grande finesse sont obtenues avec une consommation énergétique importante provoquant une élévation de température du milieu dépassant la plupart du temps 100° C, et une consommation élevée de l'ordre de

3

1% de l'agent de broyage à l'état sec par rapport au poids de carbonate de calcium sec si l'on veut obtenir plus de 60 % de particules inférieures à 1 micron et une concentration en Carbonate de Calcium supérieure à 70 %.

Or l'utilisation de quantités d'agent de broyage trop élevées mais néanmoins nécessaires jusqu'ici pour obtenir ces suspensions fines, concentrées, de rhéologie et de stabilité acceptables pour les applications de couchage papetier présente plusieurs inconvénients majeurs, tels par exemple ceux énoncés ci après :

- un premier inconvénient se manifeste dans l'industrie du papier lors du recyclage des "cassés". Car par le fait de ce recyclage un apport trop important de polyacrylate anionique provoque l'inhibition au moins partielle des agents de rétention cationiques utilisés et perturbe la formation de la feuille.
- un autre inconvénient réside dans le fait que ces agents pouvant se retrouver en partie dans les eaux de rejet empêchent la clarification de celles-ci et contribuent à en augmenter la Demande Chimique en Oxygène (DCO) combattue par les agences de bassin,
- de plus, un inconvénient qui relève de la protection de l'homme contre la toxicité, est d'ordre juridique car les lois nationales imposent que les papiers, en particulier ceux destinés à être en contact avec les aliments, contiennent des teneurs limitées en de tels agents, teneurs non accessibles avec les procédés de broyage et agents de broyage actuels.
- enfin, l'excès d'agent de broyage constitue une dépense inutile qui est un inconvénient.

Toutes ces raisons ont conduit la demanderesse à poursuivre ses recherches et à mettre au point un procédé de broyage qui, de manière surprenante, permet de réaliser des suspensions pigmentaires répondant aux mêmes critères de qualité que celles de l'art antérieur, tout en utilisant des quantités beaucoup plus faibles d'agents de broyage.

## Sommaire de l'invention

Selon l'invention, le procédé de broyage en milieu aqueux de Carbonate de Calcium en présence d'un agent de broyage hydrosoluble en quantité très inférieure à celle mise en oeuvre dans l'art antérieur, conduisant néanmoins à des suspensions affinées ayant une concentration en matière sèche d'au moins 70 % en poids et une coupe granulométrique d'au plus deux micromètres se caractérise en ce que le milieu de broyage comprenant les corps broyants, la phase aqueuse contenant l'agent de broyage et le Carbonate de Calcium à broyer en suspension, est maintenu pendant l'opération de broyage à une température inférieure à 60°C.

## Description détaillée de l'invention

D'une manière préférentielle, la température du milieu de broyage est maintenue à une température de 45°C, et très souhaitablement à une température inférieure à 30°C.

Le refroidissement de la suspension de Carbonate de Calcium soumise au broyage peut être réalisé par tout moyen connu, soit par passage à travers un échangeur de chaleur, soit en équipant d'un système de refroidissement les parois extérieures du broyeur, ou encore les impulseurs internes et contre-disques éventuels.

L'agent de broyage est préférentiellement constitué, par au moins un polymère et/ou copolymère acide obtenu à partir d' au moins un monomère éthylénique carboxylé.

Le monomère éthylénique carboxylé est choisi parmi les acides acrylique, méthacrylique, itaconique, crotonique, fumarique, anhydride maléique ou encore isocrotonique, aconitique, mésaconique, sinapique, undécylénique, angélique, hydroxyacrylique, mais il est préférentiellement choisi parmi les acides acrylique et méthacrylique.

Le monomère éthylénique carboxylé peut être associé à au moins un autre monomère éthylénique ne comportant pas de fonctions carboxylées. Ces autres monomères appartiennent par exemple, au groupe constitué par l'acroléïne, l'acrylamide et ses substitués, l'acrylonitrile, les esters des acides acrylique et méthacrylique et, en particulier, les acrylates et méthacrylates en $C_1$ à $C_8$ ainsi que le méthacrylate de diméthylaminoéthyle quaternisé ou non, les imidazoles, vinylpyrolidone, vinylcaprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés plus spécialement les acrylates et les méthacrylates d'éthylène glycol, de propylène glycol ainsi que leurs dérivés phosphatés, phosphonés, phosphonylés, sulfatés, sulfonés, nitrés, nitrosés.

Ces polymères et/ou copolymères acides résultent de la polymérisation et/ou copolymérisation selon les procédés connus, en présence d'initiateurs et des régulateurs appropriés, en milieu aqueux, alcoolique, hydroalcoolique, aromatique, aliphatique ou dans un solvant halogéné, de l'un au moins des monomères acides acrylique et/ou méthacrylique.

Ainsi, le milieu de polymérisation peut être l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, le chlorure de méthyle, les éthers de monopropylène glycol, diéthylèneglycol.

Selon une variante qui s'est révélée être intéressante, les polymères et/ou copolymères selon l'invention en solution aqueuse peuvent être totalement ou partiellement neutralisés par un agent de neutralisation disposant d'une fonction monovalente. Toutefois, à cet agent monovalent peut être associé un agent de neutralisation ayant une fonction polyvalente.

Dans le premier cas, l'agent de neutralisation est souhaitablement choisi dans le groupe constitué par les cations alcalins et assimilés, en particulier le lithium, le sodium, le potassium, l'ammonium ou amine éventuellement polysubstituée. Cet agent, dans le deuxième cas, peut être associé à un agent du groupe des alcalino-terreux ou assimilés, préférentiellement le calcium et le magnésium, le zinc, l'aluminium.

La phase liquide résultant de la polymérisation et/ou copolymérisation et contenant le polymère et/ou copolymère acide peut être utilisée sous cette forme comme agent de broyage du Carbonate de Calcium à affiner.

En pratique, le broyage comprendra les phases suivantes :

a) on réalise sous agitation la préparation d'une suspension aqueuse de Carbonate de Calcium grossier en introduisant d'abord tout ou partie de l'agent de broyage dans la phase aqueuse puis le carbonate de calcium de manière à obtenir une suspension fluide et souhaitablement homogène,

b) on introduit en continu la suspension préparée selon (a) dans une zone de broyage constituée par un broyeur à micro-éléments,

c) on maintient la température de la suspension au cours du broyage à un niveau inférieur à 60° C et préférentiellement en dessous de 45° C et très préférentiellement en dessous de 30° C,

d) on malaxe la suspension à broyer en présence des micro-éléments pendant le temps nécessaire à l'obtention de la granulométrie moyenne recherchée,

e) éventuellement, on introduit au cours du broyage en au moins une fois une fraction complémentaire de l'agent de broyage,

f) à la sortie du broyeur, on sépare en continu la suspension de carbonate de calcium finement broyée des corps broyants et des particules de carbonate de calcium refusées parce que trop grossières.

L'agent de broyage selon l'invention sera introduit dans la suspension aqueuse de carbonate de calcium à raison de 0,05 à 1 % en poids de matières actives par rapport au poids sec de carbonate de calcium grossier à broyer, et préférentiellement à raison de 0,1 % à 0,8 %.

La suspension, au cours du broyage et recueillie à l'issue du broyage, a généralement une concentration en matière sèche d'au moins 70 % et préférentiellement comprise dans l'intervalle de 72 à 80 % en poids, une coupe des particules pigmentaires inférieure à 2 micromètres, 60 % d'entre elles ayant une dimension inférieure à 1 micromètre.

La suspension aqueuse de Carbonate de Calcium selon l'invention peut être avantageusement uilisée dans les domaines du papier (charge de masse ou couchage) et de la peinture. Le Carbonate de Calcium broyé résultant d'un tel procédé peut être séché et également utilisé comme charges dans le domaine des matières polymères.

La portée et l'intérêt de l'invention seront mieux perçus grâce aux exemples suivants :

Exemple 1

Cet exemple, dont le but est d'illustrer l'art connu, concerne la préparation d'une suspension de Carbonate de Calcium grossier soumise à un broyage pour l'affiner en une suspension microparticulaire.

Dans ce but, une suspension de carbonate de calcium grossière a été préparée à partir d'un Carbonate de Calcium naturel de diamètre moyen 50 micromètres, en mettant en oeuvre comme agent de broyage un acide polyacrylique de poids moléculaire 4000 dont 70 % des fonctions ont été neutralisées par l'ion sodium et 30 % par l'ion calcium.

Cet Exemple concerne donc la préparation et le broyage de suspensions aqueuses de carbonate de calcium ayant une concentration en matière sèche de 75 % en poids sans utiliser de dispositif de refroidissement.

Exemple 2

Un deuxième groupe d'exemples (exemples 2-1, 2-2, 2-3, 2-4) concerne la préparation et le broyage de la même suspension aqueuse de carbonate de calcium à la même concentration de matière sèche en présence du même polyacrylate mixte sodium/calcium de poids moléculaire moyen 4000, la température étant contrôlée à 60°C pour l'Exemple 2-1, 45° C pour l'Exemple 2-2 et 25° C pour les Exemples 2-3 et 2-4.

Ces Exemples ont été exécutés selon les mêmes critères expérimentaux en effectuant le broyage dans le même appareillage afin que les résultats obtenus puissent être comparés.

Pour chaque exemple, on a préparé une suspension aqueuse de carbonate de calcium d'origine telle que précitée, ayant une granulométrie inférieure à 50 micromètres.

La suspension aqueuse avait une concentration exprimée en pour cent en poids par rapport à la masse totale, selon les quantités indiquées dans le tableau 1 ci-après.

L'agent de broyage était présent dans cette suspension selon les quantités indiquées dans le tableau 1 ci-après, exprimées en pour cent en poids par rapport à la masse de carbonate de calcium à broyer; cette quantité a été ajustée de manière à maintenir la viscosité de la suspension pendant le broyage entre 100 et 500 Centipoises mesurée au viscosimètre Brookfield à 100 tours par minute (mobile 3).

La suspension ainsi préparée était placée dans un broyeur du type Dyno-Mill à cylindre fixe et impulseur tournant, dont le corps broyant était constitué par des billes de corindon de diamètre compris dans l'intervalle 0,6 millimètre à 1,0 millimètre.

Le volume total occupé par le corps broyant était de 5 litres tandis que sa masse était de 10 kilogrammes.

La chambre de broyage avait un volume de 5 litres.

La vitesse tangentielle du broyeur était de 10 mètres par seconde.

La suspension de carbonate de calcium était recyclée à raison de 50 litres par heure.

La sortie du broyeur Dyno-Mill était munie d'un séparateur de mailles 300 microns, permettant de séparer le corps broyant de la suspension résultant du broyage.

La température de l'Exemple 1 s'est stabilisée à 100°C.

Le broyage a été poursuivi par recyclage jusqu'à obtention d'une granulométrie des particules telle que 75 % d'entre elles soient inférieures à 1 micron.

A la fin du broyage, la viscosité de la suspension microparticulaire était mesurée à l'aide d'un viscosimètre Brookfield, à une température de 20° C et à la vitesse de rotation de 100 tours par minute (mobile n° 3).

De même, à la fin du broyage, la granulométrie était déterminée par un granulomètre à Laser H R 850 de la société CILAS ALCATEL.

Les résultats obtenus sont consignés dans le tableau 1 ci-après.

TABLEAU 1

| Exemples | Extrait sec (%) | Pourcentage des particules inférieures à 1 micron (%) | Viscosité Brookfield 100 T/mn à 20°C (cP) | Température de broyage (°C) | Pourcentage d'agent de broyage nécessaire (%) | Economie de dispersant (- %) |
|---|---|---|---|---|---|---|
| Exemple 1 (Art Antérieur) | 75 % | 75 % | 340 cP | 100°C | 1,10 % | 0 |
| Exemple 2-1 (Invention) | 75 % | 76 % | 320 cP | 60°C | 0,73 % | - 33 % |
| Exemple 2-2 (Invention) | 75 % | 75 % | 360 cP | 45°C | 0,52 % | - 52 % |
| Exemple 2-3 (Invention) | 75 % | 76 % | 350 cP | 25°C | 0,46 % | - 58 % |
| Exemple 2-4 (Invention) | 77 % | 76 % | 460 cP | 25°C | 0,53 % | - 52 % |

Ainsi il apparait clairement que le contrôle de la température à des valeurs inférieures à 60° C permet d'obtenir des suspensions aqueuses de $CaCO_3$ ayant mêmes caractéristiques de rhéologie, finesse et concentration que celles obtenues à plus haute température mais avec une économie importante d'agent de broyage pouvant dépasser 50 %.

De plus, ce contrôle en température permet d'augmenter le concentration en matière sèche de la suspension broyée, ladite suspension conservant néanmoins les bonnes caractéristiques de finesse et de viscosité.

D'autre part, on a contrôlé l'évolution dans le temps de la viscosité des suspensions de carbonate de calcium obtenues par broyage à différentes températures de façon à observer les conséquences éventuelles d'une utilisation plus faible d'agent dispersant lorsqu'on travaille à une bonne température.

Les résultats obtenus sont consignés dans le tableau 2 ci-après.

Ainsi il apparait que les suspensions de carbonate de calcium obtenues par broyage à basse température et contenant des quantités réduites d'agent dispersant présentent malgré tout une meilleure stabilité au stockage que dans le cas de l'art connu qui se traduit par une viscosité plus stable et plus basse dans le temps.

TABLEAU 2

| Exemples | Viscosité immédiate | Viscosité après 24 H | | Viscosité après 8 heures | |
|---|---|---|---|---|---|
| | | AVAG (*) | APAG (**) | AVAG (*) | APAG (**) |
| Exemple 1 100°C (art antérieur) | 340 cP | 950 cP | 340 cP | 1 600 cP | 550 cP |
| Exemple 2-1 60°C (invention) | 320 cP | 950 cP | 340 cP | 1 200 cP | 410 cP |
| Exemple 2-2 45°C (invention) | 360 cP | 870 cP | 350 cP | 1 200 cP | 330 cP |
| Exemple 2-3 30°C (invention) | 350 cP | 750 cP | 330 cP | 950 cP | 290 cP |
| Exemple 2-4 25°C (invention) | 460 cP | 860 cP | 430 cP | 1 100 cP | 430 cP |

(*) AVAG : viscosité mesurée sur la suspension conservée au repos et avant agitation.

(**) APAG : viscosité mesurée sur la suspension que l'on a préalablement agitée.

**Revendications**

1. Procédé de broyage en milieu aqueux de Carbonate de Calcium en présence d'un agent de broyage hydrosoluble caractérisé en ce que le milieu de broyage comprenant les corps broyants, la phase aqueuse contenant l'agent de broyage et le Carbonate de Calcium à broyer en suspension est maintenu pendant l'opération de broyage à une température inférieure à 60° C.

2. Procédé de broyage selon la revendication 1 caractérisé en ce que le milieu de broyage est maintenu à une température préférentiellement inférieure à 45° C, très préférentiellement inférieure à 30° C.

3. Procédé de broyage selon les revendications 1 ou 2 caractérisé en ce que la suspension de Carbonate de Calcium a une concentration en pour cent en poids d'au moins 70 % et préférentiellement comprise entre 72 % et 80 %.

4. Procédé de broyage selon l'une quelconque des revendications 1 à 3 caractérisé en ce que l'agent de broyage est préférentiellement constitué par au moins un polymère et/ou copolymère acide obtenu à partir d'au moins un monomère éthylénique carboxylé.

5. Procédé de broyage selon la revendication 4 caractérisé en ce que le monomère éthylénique carboxylé est choisi dans le groupe constitué par les acides acrylique et méthacrylique, itaconique, crotonique, fumarique, anhydride maléïque ou encore isocrotonique, aconitique, mésaconique, sinapique, undécylénique, angélique, hydroxyacrylique.

6. Procédé de broyage selon la revendication 4 caractérisé en ce que le monomère éthylénique carboxylé est préférentiellement choisi parmi les acides acrylique et méthacrylique.

7. Procédé de broyage selon la revendication 4 caractérisé en ce que le monomère éthylénique carboxylé est associé à au moins un autre monomère éthylénique appartenant au groupe constitué par l'acrolëine, l'acrylamide et ses substitués, l'acrylonitile, les esters des acide acrylique et méthacrylique et, en particulier, les acrylates et méthacrylates en C1 à C8 ainsi que le méthacrylate de diméthylaminoéthyle quaternisé ou non, les imidazoles, vinylpyrolidone, vinylprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés, plus spécialement les acrylates et les méthacrylates d'éthylène glycol, de propylène glycol ainsi que leurs dérivés phosphatés, phosphonés, phosphonylés, sulfatés, sulfonés, nitrés, nitrosés.

8. Procédé de broyage selon l'une quelconque des revendications 1 à 7 caractérisé en ce que l'agent de broyage est mis en oeuvre sous une forme a moins partiellement neutralisée par un agent de neutralisation disposant d'une fonction monovalente.

9. Procédé de broyage selon la revendication 8 caractérisé en ce que l'agent de neutralisation est choisi dans le groupe des métaux alcalins et assimilés et préférentiellement dans le groupe constitué par le lithium, le sodium, le potassium et l'ammonium.

10. Procédé de broyage selon l'une quelconque des revendications 8 et 9 caractérisé en ce que l'agent de neutralisation monovalent est associé à un agent de neutralisation polyvalent.

11. Procédé de broyage selon la revendication 10, caractérisé en ce que l'agent de neutralisation polyvalent est choisi dans le groupe constitué par le calcium, le magnésium, le zinc, l'aluminium, les amines.

12. Procédé de broyage selon l'une quelconque des revendications 1 à 11 caractérisé en ce que l'agent de broyage est introduit à raison de 0,05 à 1,0 % en poids de matières actives par rapport au poids sec de Carbonate de Calcium et préférentiellement à raison de 0,1 % à 0,8 %.

13. Suspension aqueuse de carbonate de calcium affiné selon l'une quelconque des revendications 1 à 12 caractérisée en ce qu'elle contient l'agent de broyage en quantité allant de 0,46 % à 0,73 % en poids de matières actives par rapport au poids sec de carbonate de calcium à broyer et caractérisée en ce qu'elle a une concentration en matière sèche comprise entre 75 et 77 % en poids par rapport à la masse totale de la suspension et en ce que la dimension des particules affinées est en coupe inférieure à 2 micromètres, au moins 75 % des dites particules ayant une dimension inférieure à un micromètre.

14. Application de la suspension aqueuse de carbonate de calcium affiné obtenue selon la revendication 13 au domaine de la charge de masse et du couchage du papier, ainsi qu'au domaine des peintures, et des matières polymères après l'élimination de la phase aqueuse.

**Claims**

1. Procedure for crushing of calcium carbonate in an aqueous medium in the presence of a water-soluble crushing agent, characterised by the fact that the crushing medium including the crushing bodies, the aqueous phase containing the crushing agent and the calcium carbonate to be crushed in suspension is maintained during the crushing operation at a temperature below 60° C.

2. Procedure for crushing according to claim 1 characterised by the fact that the crushing medium is maintained at a temperature preferably below 45° C, and most preferably below 30° C.

3. Procedure for crushing according to claims 1 or 2, characterised by the fact that the suspension of calcium carbonate has a concentration of at least 70 per cent by weight and preferably between 72 and 80 per cent.

4. Procedure for crushing according to any one of claims 1 to 3, characterised by the fact that the crushing agent is preferentially made up of at least one acid polymer and/or copolymer obtained from at least one carboxylated ethylenic monomer.

5. Procedure for crushing according to claim 4, characterised by the fact that the carboxylated ethylenic monomer is chosen from the group comprised of the acrylic or methacrylic, itaconic, crotonic, fumaric, or maleic anhydride acids, or the isocrotonic, aconitic, mesaconic, sinapic, undecylenic, angelic or hydroxyacrylic acids.

6. Procedure for crushing according to claim 4, characterised by the fact that the carboxylated ethylenic monomer is preferentially chosen from among the acrylic and methacrylic acids.

7. Procedure for crushing according to claim 4, characterised by the fact that the carboxylated ethylenic monomer is associated with at least one other ethylenic monomer belonging to the group comprised of acroleine, acrylamide and its substitutes, acrylonitrile, the esters of acrylic and methacrylic acids, and, in particular, the C1 to C8 acrylates and methacrylates as well as dimethylaminoethyl methacrylate (quaternised or not), the imidazoles, vinylpyrolidone, vinylcaprolactame, ethylene, propylene, isobutylene, diisobutylene, vinyl acetate, styrene and its substitutes, alphamethylstyrene, methylvinylcetone, the vinyl chlorides, the hydroxylated monomers, more particularly the acrylates and methacrylates of ethylene glycol and propylene glycol and their phosphate, phosphonate, phosphonylate, sulphate, sulphonate, nitrate and nitroso derivatives.

8. Procedure for crushing according to any one of claims 1 to 7, characterised by the fact that the crushing agent is used in a form at least partially neutralised by a neutralising agent having a monovalent function.

9. Procedure for crushing according to claim 8 characterised by the fact that the neutralising agent is chosen from the group of alkaline metals and similar, and preferentially from the group comprised of lithium, sodium, potassium and ammonium.

10. Procedure for crushing according to either of claims 8 or 9, characterised by the fact that the monovalent neutralising agent is associated with a polyvalent neutralising agent.

11. Procedure for crushing according to claim 10, characterised by the fact that the polyvalent neutralising agent is chosen from the group comprised of calcium, magnesium, zinc, aluminium and the amines.

EP 0 380 430 B1

**12.** Procedure for crushing according to any one of claims 1 to 11, characterised by the fact that the crushing agent is introduced at a level of 0.05% to 1.0% by weight of active matter in relation to the dry weight of calcium carbonate and preferentially at a level of 0.1% to 0.8%.

**13.** An aqueous suspension of refined calcium carbonate according to any one of claims 1 to 12, characterised by the fact that it contains the crushing agent in a quantity ranging from 0.46% to 0.73% by weight of active matter in relation to the dry weight of the calcium carbonate to be crushed, and characterised by the fact that its concentration of dry matter is between 75% and 77% by weight in relation to the total mass of the suspension and the dimension of the refined particles is in section less than 2 micrometers, at least 75% of the said particles having a size of less than 1 micrometer.

**14.** Application of the aqueous suspension of refined calcium carbonate obtained according to claim 13 to the field of weighting and coating of paper, and to the field of paints, and of the polymer materials after elimination of the aqueous phase.

**Patentansprüche**

**1.** Verfahren zum Mahlen von Calciumcarbonat in einem wäßrigen Medium in Gegenwart eines wasserlöslichen Mahlmittels, dadurch gekennzeichnet, daß das Mahlmedium, das Mahlkörper enthält, die wäßrige Phase, die das Mahlmittel und das zu mahlende Calciumcarbonat in Suspension enthält, während des Mahlvorgangs bei einer Temperatur unterhalb von 60°C gehalten wird.

**2.** Verfahren zum Mahlen nach Anspruch 1, dadurch gekennzeichnet, daß das Mahlmedium bei einer Temperatur von vorzugsweise unterhalb von 45°C, sehr bevorzugt unterhalb von 30°C, gehalten wird.

**3.** Verfahren zum Mahlen nach den Ansprüchen 1 oder 2, dadurch gekennzeichnet, daß die Calciumcarbonat-Suspension eine Konzentration in Gew.-% von mindestens 70% und bevorzugt zwischen 72% und 80% eingeschlossen enthält.

**4.** Verfahren zum Mahlen nach irgendeinem der Ansprüche 1 bis 3, dadurch gekennzeichnet, daß das Mahlmittel vorzugsweise aus mindestens einem sauren Polymer und/oder Copolymer aufgebaut ist, das ausgehend von mindestens einem ethylenischen carboxylierten Monomer erhalten worden ist.

**5.** Verfahren zum Mahlen nach Anspruch 4, dadurch gekennzeichnet, daß das ethylenische carboxylierte Monomer aus der Gruppe ausgewählt ist, die aus Acryl- und Methacryl-, Itacon-, Croton-, Fumarsäure, Maleinsäureanhydrid oder auch Isocroton-, Aconit-, Mesacon-, Sinapin-, Undecylen-, Angelika-, Hydroxyacrylsäure besteht.

**6.** Verfahren zum Mahlen nach Anspruch 4, dadurch gekennzeichnet, daß das ethylenische carboxylierte Monomer vorzugsweise aus Acryl- und Methacrylsäure ausgewählt ist.

**7.** Verfahren zum Mahlen nach Anspruch 4, dadurch gekennzeichnet, daß das ethylenische carboxylierte Monomer mit mindestens einem anderen ethylenischen Monomer assoziiert ist, das aus der Gruppe ausgewählt ist, die aus Acrolein, Acrylamid und seinen substituierten Verbindungen, Acrylnitril, Estern von Acryl- und Methacrylsäure und insbesondere den C1- bis C8-Acrylaten und -Methacrylaten sowie dem Methacrylat von quaternisiertem oder nicht quaternisiertem Dimethylaminoethyl, Imidazolen, Vinylpyrrolidon, Vinylcaprolactam, Ethylen, Propylen, Isobutylen, Diisobutylen, Vinylacetat, Styrol und seinen substituierten Verbindungen, alpha-Methylstyrol, Methylvinylketon, Vinylchloriden, hydroxylierten Monomeren, insbesondere den Acrylaten und Methacrylaten von Ethylenglykol, Propylenglykol, sowie deren phosphatierten, phosphonierten, phosphonylierten, sulfatierten, sulfonierten, nitrierten, nitrosierten Derivaten besteht.

**8.** Verfahren zum Mahlen nach irgendeinem der Ansprüche 1 bis 7, dadurch gekennzeichnet, daß das Mahlmittel in einer Form verwendet wird, die mindestens teilweise durch ein Neutralisationsmittel neutralisiert ist, das über eine einwertige Funktion verfügt.

**9.** Verfahren zum Mahlen nach Anspruch 8, dadurch gekennzeichnet, daß das Neutralisationsmittel aus der Gruppe, die aus Alkalimetallen und verwandten Verbindungen besteht, und vorzugsweise aus der Gruppe ausgewählt ist, die aus Lithium, Natrium, Kalium und Ammonium besteht.

10. Verfahren zum Mahlen nach irgendeinem der Ansprüche 8 und 9, dadurch gekennzeichnet, daß das einwertige Neutralisationsmittel mit einem mehrwertigen Neutralisationsmittel assoziiert ist.

11. Verfahren zum Mahlen nach Anspruch 10, dadurch gekennzeichnet, daß das mehrwertige Neutralisationsmittel aus der Gruppe ausgewählt ist, die aus Calcium, Magnesium, Zink, Aluminium, Aminen besteht.

12. Verfahren zum Mahlen nach irgendeinem der Ansprüche 1 bis 11, dadurch gekennzeichnet, daß das Mahlmittel in einem Verhältnis von 0,05 bis 1,0 Gew.-% und vorzugsweise 0,1% bis 0,8 % an aktiven Materialien, bezogen auf das Trockengewicht von Calciumcarbonat, eingesetzt wird.

13. Wäßrige Suspension von Calciumcarbonat, das nach irgendeinem der Ansprüche 1 bis 12 verfeinert worden ist, dadurch gekennzeichnet, daß sie das Mahlmittel in einer Menge enthält, die 0,46 bis 0,73 Gew.-% an aktiven Materialen, bezogen auf das Trockengewicht des zu mahlenden Calciumcarbonats, beträgt, und dadurch gekennzeichnet, daß sie eine Konzentration an trockenem Material aufweist, die zwischen 75 und 77 Gew.-%, bezogen auf das Gesamtgewicht der Suspension, eingeschlossen ist, und daß die Abmessung der verfeinerten Teilchen im Schnitt unterhalb von 2 $\mu$m liegt, wobei mindestens 75% der genannten Teilchen eine Abmessung unterhalb von 1 $\mu$m aufweisen.

14. Verwendung der wäßrigen Suspension von verfeinertem Calciumcarbonat, erhalten nach Anspruch 13, im Bereich der Füllstoffbeladung und der Beschichtung von Papier und im Bereich der Anstrichfarben sowie im Bereich der Kunstoffmaterialien nach Entfernung der wäßrigen Phase.